# EUROPEAN PATENT APPLICATION

(11) **EP 4 513 660 A1**
(43) Date of publication of application: **26.02.2025**
(21) Application number: 23887558.7
(22) Date of filing: 10.08.2023
(51) Int. Cl.: H01M 50/531, B23K 20/10, H01M 50/528, H01M 10/0525

(54) **TAB WELDING STRUCTURE AND BATTERY**

(30) Priority: 30.06.2023 CN 202321701650 U
(71) Applicant: Eve Power Co., Ltd., Jingmen, Hubei 448000 (CN)
(72) Inventor: XU, Yunjie, Jingmen, Hubei 448000 (CN); ZHAO, Xiaolong, Jingmen, Hubei 448000 (CN); SUN, Fei, Jingmen, Hubei 448000 (CN); YANG, Xin, Jingmen, Hubei 448000 (CN)
(74) Representative: De Clercq & Partners
(86) International application number: PCT/CN2023/112151
(87) International publication number: WO 2024/098863

(57) **Abstract**

Disclosed are a tab welding structure and a battery. The tab welding structure includes a tab and a to-be-welded part, where the to-be-welded part is welded on the tab to form a connecting portion, a plurality of first welding mark structures that are concave in a thickness direction of the connecting portion are formed on the connecting portion, each of the plurality of first welding mark structures includes a first welding surface and a first surrounding wall that are connected to each other, and the first surrounding wall is an arc surface.

## Description

### Cross-Reference to Related Application

The present disclosure claims the priority to Chinese Patent Application No. 202321701650.X, filed with the Chinese Patent Office on June 30, 2023, which is incorporated herein in its entirety by reference.

### Technical Field

The present disclosure relates to the technical field of battery manufacturing, and particularly relates to a tab welding structure and a battery.

### Background

In a lithium-ion battery machining process, ultrasonic welding is employed to weld tabs and connectors as well as the tabs and collectors in most cases. Ultrasonic welding is a process to transmit high-frequency vibration waves to the surfaces of two objects to be welded, cause the surfaces of the two objects to rub against each other and fuse molecular layers under pressure.

Welding teeth of an ultrasonic welding device in the related art generally have the following two structures:
1) Cylindrical teeth, although they cause less damage to the tabs during welding, the welding effect is poor, and the use performance of the tabs is likely to be affected.
2) Sharp teeth, although they are better in welding effect, the tabs are susceptible to damage, and protective sheets are required to avoid breakage of the tabs, so the welding process is complicated, and the welding cost is high.

### Summary

The present disclosure provides a tab welding structure, so as to effectively avoid the problems of overwelding, welding penetration and faulty soldering in a welding process, a welding effect is desirable, and welding cost is low.

The present disclosure provides a battery. By applying the tab welding structure, it can be guaranteed that the battery has desirable service performance, and safety of the battery is improved.

In an embodiment of the present disclosure, a tab welding structure is provided. The structure includes: a tab and a to-be-welded part, where the to-be-welded part is welded on the tab to form a connecting portion, a plurality of first welding mark structures that are concave in a thickness direction of the connecting portion are formed on the connecting portion, each of the plurality of first welding mark structures includes a first welding surface and a first surrounding wall that are connected to each other, and the first surrounding wall is an arc surface.

In an embodiment, each of the plurality of first welding mark structures (20) has at least one of the following configurations:
the first welding surface has an area in a range from 0.08 mm² to 0.6 mm²;
each of the plurality of first welding mark structures has a depth in a range from 0.5 mm to 1 mm; or,
an opening of each of the plurality of first welding mark structures has a diameter in a range from 1.2 mm to 1.9 mm.

In an embodiment, a plurality of second welding mark structures that are concave in the thickness direction of the connecting portion are further formed on the connecting portion, each of the plurality of second welding mark structures includes a second welding surface and a second surrounding wall that are connected to each other, the second surrounding wall includes a plurality of side surrounding sub-walls sequentially connected end to end, and each of the plurality of side surrounding sub-walls is of planar structure.

In an embodiment, each of the plurality of second welding mark structures (30) has at least one of the following configurations:
each of the plurality of second welding mark structures has a depth in a range from 0.5 mm to 1 mm;
the second welding surface has an area in a range from 0.08 mm² to 0.6 mm²; or,
an opening of each of the plurality of second welding mark structures has a side length in a range from 1.2 mm to 1.9 mm.

In an embodiment, two of the plurality of side surrounding sub-walls which are adjacent are connected in a circular arc transition connection, each of the plurality of side surrounding sub-walls and the second welding surface are also connected in a circular arc transition connection.

In an embodiment, the plurality of first welding mark structures are arranged in a rectangular array, and the plurality of second welding mark structures are arranged around the plurality of first welding mark structures.

In an embodiment, the plurality of second welding mark structures are arranged in a rectangular array, and the plurality of first welding mark structures are arranged around the plurality of second welding mark structures.

In an embodiment, the plurality of first welding mark structures and the plurality of second welding mark structures are arranged alternately.

In an embodiment, the second welding surface is an n-polygon, and n is an integer greater than or equal to 3.

In another embodiment of the present disclosure, a battery is provided. The battery includes a case and a cell, where the cell is located in the case, and the cell includes the above tab welding structure.

### Brief Description of the Drawings

Fig. 1 is a schematic structural diagram of a tab welding structure provided in Embodiment 1 of the present disclosure;
Fig. 2 is a partial enlarged view of portion A in Fig. 1;
Fig. 3 is a schematic diagram of a partial structure of an ultrasonic welding head provided in Embodiment 1 of the present disclosure;
Fig. 4 is a schematic structural diagram of a welding tooth provided in Embodiment 1 of the present disclosure;
Fig. 5 is a schematic diagram of a first arrangement of first welding mark structures and second welding mark structures provided in Embodiment 2 of the present disclosure;
Fig. 6 is a schematic diagram of a second arrangement of first welding mark structures and second welding mark structures provided in Embodiment 2 of the present disclosure; and
Fig. 7 is a schematic diagram of a third arrangement of first welding mark structures and second welding mark structures provided in Embodiment 2 of the present disclosure.

In the figures:
10-tab; 20-first welding mark structure; 201-first welding surface; 202-first surrounding wall; 30-second welding mark structure; 301-second welding surface; 302-second surrounding wall; 40-to-be-welded part; 50-case; 60-cell;
1-welding body; 2-welding platform; 3-welding tooth; 31-welding surface; 32-fixing surface; and 33-arc surface.

### Detailed Description of the Embodiments

In the present disclosure, unless expressly specified and defined otherwise, the terms such as "connected", "connection" and "fix" should be understood broadly, and may denote, for example, fixed connection, detachable connection, integrated connection, mechanical connection, electric connection, direct connection, indirect connection through an intermediate medium, communication between interiors of two elements or interaction between two elements.

In the present disclosure, a first feature being "on" or "underneath" a second feature can include that the first feature and the second feature are in direct contact, or in indirect contact through another feature therebetween unless explicitly specified and limited otherwise. Moreover, the first feature being "on", "above", and "over" the second feature includes that the first feature is exactly above the second feature or not, or merely indicates that the first feature has a higher level than the second feature. The first feature being "underneath", "below", and "under" the second feature includes that the first feature is exactly below the second feature or not, or merely indicates that the first feature has a lower level than the second feature.

In the description of the example, the orientation or position relations indicated by the terms "upper", "lower", "left", "right", etc. are based on the orientation or position relations shown in the accompanying drawings, merely for facilitating the description and simplifying the operation, rather than indicating or implying that a device or element referred to must have a particular orientation or be constructed and operated in a particular orientation, and therefore cannot be interpreted as limiting the present disclosure. Moreover, the terms "first" and "second" are merely used to distinguish in description and have no special meanings.

### Embodiment

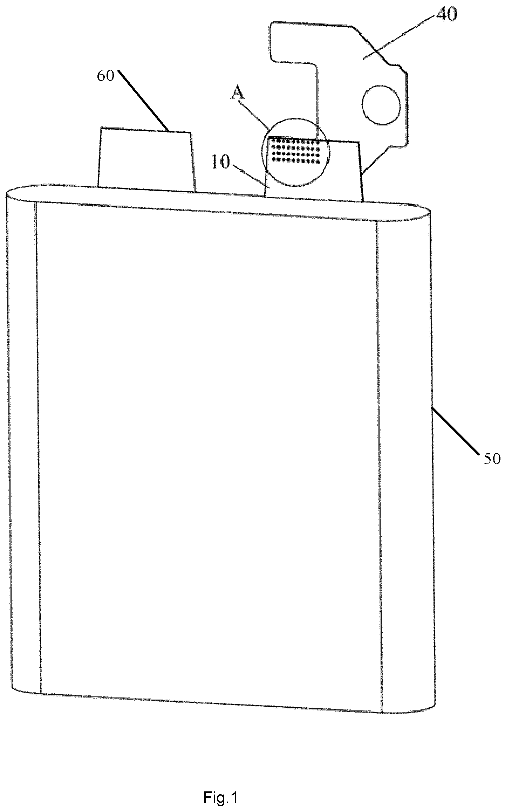

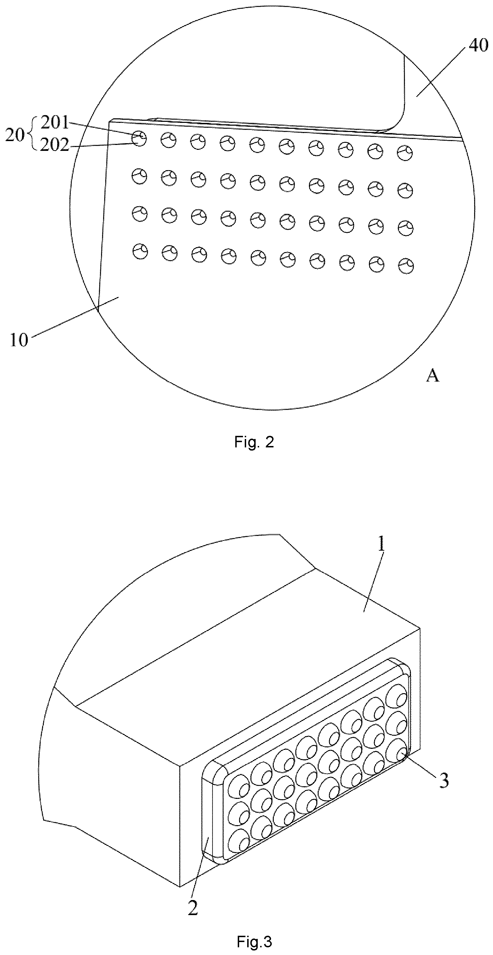

Fig. 1 shows a schematic structural diagram of a tab welding structure provided in an embodiment. Fig. 2 shows a partial enlarged view of portion A in Fig. 1. As shown in Figs. 1 and 2, the embodiment provides a tab welding structure. The tab welding structure includes: a tab 10 and a to-be-welded part 40. The to-be-welded part 40 is welded on the tab 10 to form a connecting portion. A plurality of first welding mark structures 20 that are concave in a thickness direction of the connecting portion are formed on the connecting portion. Each of the plurality of first welding mark structures 20 includes a first welding surface 201 and a first surrounding wall 202 that are connected to each other. The first surrounding wall 202 is an arc surface. By optimizing shapes of each of the plurality of first welding mark structures 20, the problems of overwelding, weld penetration and faulty soldering in a welding process can be effectively avoided. Moreover, the risk of the tab 10 being cut can be avoided, a welding effect is excellent, and no protective sheet is needed, such that welding cost can be reduced. In the embodiment, the to-be-welded part 40 is a connector.

In the embodiment, a welding mode between the to-be-welded part 40 and the tab 10 may be ultrasonic welding, laser welding, resistance welding, etc. In the embodiment, ultrasonic welding is used to weld the to-be-welded part 40 to the tab 10.

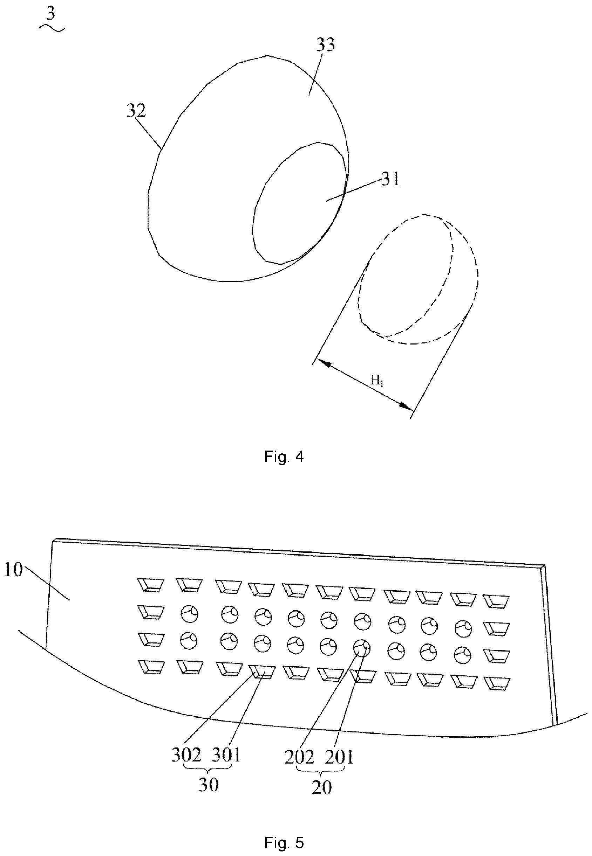

Fig. 3 shows a schematic diagram of a partial structure of an ultrasonic welding head provided in the embodiment. Fig. 4 shows a schematic structural diagram of a welding tooth 3 provided in the embodiment. For ease of understanding, a formation process of each of the plurality of first welding mark structures 20 is described in detail below with reference to Figs. 2-4. As shown in Figs. 2-4, the tab 10 and the to-be-welded part 40 are connected by ultrasonic welding by means of an ultrasonic welding apparatus. The ultrasonic welding apparatus includes an ultrasonic generator, a transducer, an amplitude transformer and an ultrasonic welding head. An output end of the ultrasonic generator is connected to the transducer, and the transducer is connected to the ultrasonic welding head by means of the amplitude transformer. When in use, the ultrasonic generator transmits a signal to the transducer, and the transducer controls the ultrasonic welding head to move by means of the amplitude transformer, so as to weld the tab 10 to the to-be-welded part 40.

The ultrasonic welding head includes a welding body 1, a welding platform 2 and welding teeth 3. The welding teeth 3 are arranged on the welding body 1 by means of the welding platform 2. Optionally, a plurality of welding teeth 3 are provided. The plurality of welding teeth 3 are arranged on the welding platform 2 in an array. The plurality of welding teeth 3 interact with the tab 10 and the to-be-welded part 40 at the same time, such that welding efficiency and welding quality can be improved.

Each of the welding teeth 3 includes a welding surface 31 and a fixing surface 32 that are oppositely arranged and concentric. The fixing surface 32 is connected to the welding platform 2. The welding surface 31 is configured to making contact with the tab 10. The welding surface 31 has a smaller area than the fixing surface 32. In a welding process, welding pressure is gradually increased, and under the action of the welding teeth 3, the tab 10 and the to-be-welded part 40 begin to deform. By setting the area of the welding surface 31 to be smaller than that of the fixing surface 32, a deformation speed of the tab 10 and the to-be-welded part 40 can be slowed down, such that the tab 10 and the to-be-welded part 40 around the welding teeth 3 can be prevented from suddenly thinning and generating cracks. In the embodiment, both the welding surface 31 and the fixing surface 32 are circular. An arc surface 33 is used for transition between the welding surface 31 and the fixing surface 32. According to a structure of the welding teeth 3, a protective sheet can be eliminated, manufacturing cost of a battery can be reduced, stability of ultrasonic welding tension and residue can be guaranteed, and applicability is high. Illustratively, each of the welding teeth 3 is of a truncated hemispherical structure. When a welding tooth 3 is machined, firstly, a hemispherical structure with a diameter D is machined on the welding platform 2, and then a top-cutting operation is performed on a side of the hemispherical structure away from the welding platform 2. As shown in Fig. 4, a dotted hemisphere is a small hemisphere cut from the hemispherical structure, and a radius of the small hemisphere is a top-cutting depth H₁. Optionally, the diameter D ranges from 1.2mm to 1.9mm, a top-cutting depth H₁ is a value in a range of 0.02 mm-0.1 mm, and an area S₁ of the welding surface 31 is a value in a range from 0.08 mm² to 0.6 mm². Illustratively, D = 1.82 mm, H₁ = 0.05 mm, S₁ = 0.28 mm²; alternatively, D = 1.82 mm, H₁ = 0.02 mm, S₁ = 0.11 mm²; alternatively, D = 1.5 mm, H₁ = 0.1 mm, S₁ = 0.54 mm²; alternatively, D = 1.5 mm, H₁ = 0.02 mm, S₁ = 0.09 mm²; alternatively, D = 1.5 mm, H₁ = 0.08 mm, S₁ = 0.36 mm²; alternatively, D = 1.3 mm, H₁ = 0.04 mm, S₁= 0.16 mm²; alternatively, D = 1.3 mm, H₁ = 0.05 mm, S₁ = 0.20 mm²; alternatively, D = 1.3 mm, H₁= 0.08 mm, S₁ = 0.31 mm²; and alternatively, D = 1.3 mm, H₁ = 0.10 mm, S₁ = 0.38 mm², etc.

Each of the plurality of first welding mark structures 20 formed on the tab 10 by using the ultrasonic welding head has the following parameters: the first welding surface 201 has an area in a range from 0.08 mm² to 0.6 mm²; each of the plurality of first welding mark structures 20 has a depth in a range from 0.5 mm to 1 mm; and an opening of each of the plurality of first welding mark structures 20 has a diameter in a range from 1.2 mm to 1.9 mm. Illustratively, the first welding surface 201 may have an area of 0.09 mm², 0.1 mm², 0.15 mm², 0.2 mm², 0.25 mm², 0.3 mm², 0.35 mm², 0.4 mm², 0.45 mm², 0.5 mm², 0.55 mm², etc.; each of the plurality of first welding mark structures 20 may have a depth of 0.6 mm, 0.7 mm, 0.8 mm, 0.9 mm, etc.; and the opening of each of the plurality of first welding mark structures 20 may have a diameter of 1.3 mm, 1.4 mm, 1.5 mm, 1.6 mm, 1.7 mm, 1.8 mm, etc. In the embodiment, the above parameters are not limited and can be adjusted by the operator according to an actual situation.

Each of the plurality of first welding mark structures 20 is actually a first concave part formed on the tab 10 in the thickness direction of the tab. The opening of each of the plurality of first welding mark structures 20 is a hole formed by the first concave part on a surface of the tab 10 making contact with the welding surface 31. In the embodiment, the first welding surface 201 is circular, and is parallel to a surface of the connecting portion.

### Embodiment

Fig. 5 is a schematic diagram of a first arrangement of first welding mark structures 20 and second welding mark structures 30 provided in an embodiment. As shown in Figs. 1 and 5, the embodiment provides a tab welding structure. The tab welding structure includes a tab 10 and a to-be-welded part 40. The to-be-welded part 40 is welded on the tab 10 to form a connecting portion. A plurality of first welding mark structures 20 and a plurality of second welding mark structures 30 that are concave in a thickness direction of the connecting portion are formed on the connecting portion. Each of the plurality of first welding mark structures 20 includes a first welding surface 201 and a first surrounding wall 202 that are connected to each other, and the first surrounding wall 202 is an arc surface. Each of the plurality of second welding mark structures 30 includes a second welding surface 301 and a second surrounding wall 302 that are connected to each other. The second surrounding wall 302 includes a plurality of side surrounding sub-walls sequentially connected end to end, and each of the plurality of side surrounding sub-walls is of planar structure. By simultaneously forming the plurality of first welding mark structures 20 and the plurality of second welding mark structures 30 on the tab 10, a welding effect between the tab 10 and the to-be-welded part 40 can be guaranteed, and damage to the tab 10 can also be avoided. No protective sheet is required, and production cost is low.

In the embodiment, a welding mode between the to-be-welded part 40 and the tab 10 may be ultrasonic welding, laser welding, resistance welding, etc. In the embodiment, ultrasonic welding is used to weld the to-be-welded part 40 to the tab 10.

In the embodiment, the tab 10 and the to-be-welded part 40 are connected by ultrasonic welding by means of an ultrasonic welding apparatus. The ultrasonic welding apparatus of the embodiment has substantially the same structure as the ultrasonic welding apparatus provided in Embodiment 1. A difference lies in that, in the welding teeth 3 of the ultrasonic welding apparatus provided in the embodiment, the welding surfaces 31 and the fixing surfaces 32 of some welding teeth 3 are polygonal. A transition flat surface between the welding surface 31 and the fixing surface 32 includes at least one plane. Illustratively, the welding surfaces 31 and the fixing surfaces 32 may be triangular, rectangular, pentagonal, hexagonal, etc., which is not limited in the embodiment. That is to say, an ultrasonic welding head provided in the embodiment includes two structures of welding teeth 3. The welding surfaces 31 and the fixing surfaces 32 of one type of welding teeth 3 are both circular, and each of the one type of welding teeth 3 is of a truncated hemispherical structure. The welding surfaces 31 and the fixing surfaces 32 of the other type of welding teeth 3 are both polygonal, and each of the other type of welding teeth 3 is of a frustum structure.

Each of the plurality of second welding mark structures 30 formed on the tab 10 by using the ultrasonic welding head has the following parameters: each of the plurality of second welding mark structures 30 has a depth in a range from 0.5 mm to 1 mm; the second welding surface 301 has an area in a range from 0.08 mm² to 0.6 mm²; and an opening of each of the plurality of second welding mark structures 30 has a side length in a range from 1.2 mm to 1.9 mm. Illustratively, a welding bottom of each of the plurality of second welding mark structures 30 may have an area of 0.09 mm², 0.1 mm², 0.15 mm², 0.2 mm², 0.25 mm², 0.3 mm², 0.35 mm², 0.4 mm², 0.45 mm², 0.5 mm², 0.55 mm², etc.; each of the plurality of second welding mark structures 30 may have a depth of 0.6 mm, 0.7 mm, 0.8 mm, 0.9 mm, etc.; and the opening of each of the plurality of second welding mark structures 30 may have a diameter of 1.3 mm, 1.4 mm, 1.5 mm, 1.6 mm, 1.7 mm, 1.8 mm, etc. In the embodiment, the above parameters are not limited. The structure, shape and parameters of each of the plurality of first welding mark structures 20 formed on the tab 10 by using the ultrasonic welding head are the same as those of each of the plurality of first welding mark structures 20 in Embodiment 1. The structure, shape and parameters of each of the plurality of first welding mark structures 20 are not described in detail in the embodiment. Such design can guarantee uniformity of the welding mark structures formed on the tab 10, so as to avoid a phenomenon that thickness of some positions is thinner and thickness of some positions is thicker, and guarantee welding quality of the tab welding structure.

Each of the plurality of second welding mark structures 30 is actually a second concave part formed on the tab 10 in the thickness direction of the tab. The opening of each of the plurality of second welding mark structures 30 is a hole formed by the second concave part on a surface of the tab 10 making contact with the welding surface 31.

In the embodiment, the second welding surface 301 is an n-polygon, and is parallel to a surface of the connecting portion. Further, n is an integer greater than or equal to 3. Illustratively, the second welding surface 301 may be triangular, quadrangular, pentagonal, hexagonal, or octagonal. Moreover, the second welding surface 301 may be regular polygons or irregular polygons, which is not limited in the embodiment.

Optionally, two of the plurality of side surrounding sub-walls which are adjacent are connected in a circular arc transition connection, each of the plurality of side surrounding sub-walls and the second welding surface are also connected in a circular arc transition connection. With such arrangement, stress concentration on each of the plurality of second welding mark structures 30 can be avoided, so as to prolong the service life of the tab welding structure.

As shown in Fig. 5, in an embodiment, the plurality of first welding mark structures 20 are arranged in a rectangular array, and the plurality of second welding mark structures 30 are arranged around the plurality of first welding mark structures 20.

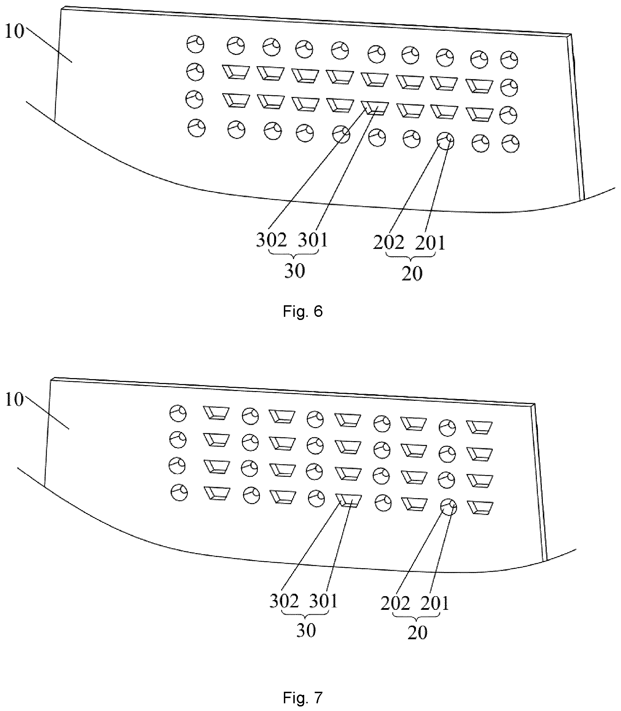

Fig. 6 is a schematic diagram of a second arrangement of first welding mark structures 20 and second welding mark structures 30 provided in another embodiment. As shown in Fig. 6, in another embodiment, the plurality of second welding mark structures 30 are arranged in a rectangular array, and the plurality of first welding mark structures 20 are arranged around the plurality of second welding mark structures 30.

Fig. 7 is a schematic diagram of a third arrangement of first welding mark structures 20 and second welding mark structures 30 provided in yet another embodiment. As shown in Fig. 7, in yet another embodiment, the plurality of first welding mark structures 20 and the plurality of second welding mark structures 30 are arranged alternately. Illustratively, the plurality of first welding mark structures 20 are arranged in rows, and the plurality of second welding mark structures 30 are arranged in rows. One row of the plurality of second welding mark structures 30 are arranged between two adjacent rows of the plurality of first welding mark structures 20, and one row of the plurality of first welding mark structures 20 are arranged between two adjacent rows of the plurality of second welding mark structures 30. Alternatively, the plurality of first welding mark structures 20 are arranged in columns, and the plurality of second welding mark structures 30 are arranged in columns. One column of the plurality of second welding mark structures 30 are arranged between two adjacent columns of the plurality of first welding mark structures 20, and one column of the plurality of first welding mark structures 20 are arranged between two adjacent columns of the plurality of second welding mark structures 30. Alternatively, one second welding mark structure 30 is arranged between every two adjacent first welding mark structures 20, and one first welding mark structure 20 is arranged between every two adjacent second welding mark structures 30.

Certainly, the plurality of first welding mark structures 20 and the plurality of second welding mark structures 30 may also be arranged in a different way, which is not limited in the embodiment and can be adjusted by the operator according to actual needs.

As shown in Fig. 1, the embodiment further provides a battery. The battery includes a case 50 and a cell 60. The cell 60 is located in the case 50. The cell 60 includes the above tab welding structure. By applying the tab welding structure, it can be guaranteed that the battery has desirable service performance, and safety of the battery is improved.

## Claims

1. A tab welding structure, comprising: a tab (10) and a to-be-welded part (40), wherein the to-be-welded part (40) is welded on the tab (10) to form a connecting portion, a plurality of first welding mark structures (20) that are concave in a thickness direction of the connecting portion are formed on the connecting portion, each of the plurality of first welding mark structures (20) comprises a first welding surface (201) and a first surrounding wall (202) that are connected to each other, and the first surrounding wall (202) is an arc surface.

2. The tab welding structure as claimed in claim 1, wherein each of the plurality of first welding mark structures (20) has at least one of the following configurations:
the first welding surface (201) has an area in a range from 0.08 mm² to 0.6 mm²;
each of the plurality of first welding mark structures (20) has a depth in a range from 0.5 mm to 1 mm; or,
an opening of each of the plurality of first welding mark structures (20) has a diameter in a range from 1.2 mm to 1.9 mm.

3. The tab welding structure as claimed in claim 1 or 2, wherein a plurality of second welding mark structures (30) that are concave in the thickness direction of the connecting portion are further formed on the connecting portion, each of the plurality of second welding mark structures (30) comprises a second welding surface (301) and a second surrounding wall (302) that are connected to each other, the second surrounding wall (302) comprises a plurality of side surrounding sub-walls sequentially connected end to end, and each of the plurality of side surrounding sub-walls is of planar structure.

4. The tab welding structure as claimed in claim 3, wherein each of the plurality of second welding mark structures (30) has at least one of the following configurations:
each of the plurality of second welding mark structures (30) has a depth in a range from 0.5 mm to 1 mm;
the second welding surface (301) has an area in a range from 0.08 mm² to 0.6 mm²; or,
an opening of each of the plurality of second welding mark structures (30) has a side length in a range from 1.2 mm to 1.9 mm.

5. The tab welding structure as claimed in claim 3, wherein two of the plurality of side surrounding sub-walls which are adjacent are connected in a circular arc transition connection, each of the plurality of side surrounding sub-walls and the second welding surface (301) are also connected in a circular arc transition connection.

6. The tab welding structure as claimed in claim 3, 4 or 5, wherein the plurality of first welding mark structures (20) are arranged in a rectangular array, and the plurality of second welding mark structures (30) are arranged around the plurality of first welding mark structures (20).

7. The tab welding structure as claimed in claim 3, 4 or 5, wherein the plurality of second welding mark structures (30) are arranged in a rectangular array, and the plurality of first welding mark structures (20) are arranged around the plurality of second welding mark structures (30).

8. The tab welding structure as claimed in claim 3, 4 or 5, wherein the plurality of first welding mark structures (20) and the plurality of second welding mark structures (30) are arranged alternately.

9. The tab welding structure as claimed in claim 3, 4 or 5, wherein the second welding surface (301) is an n-polygon, and n is an integer greater than or equal to 3.

10. A battery, comprising a case (50) and a cell (60), wherein the cell (60) is located in the case (50), and the cell (60) comprises the tab welding structure as claimed in any one of claims 1-9.
